(19)

Europäisches
Patentamt

European
Patent Office

Office européen
des brevets

(11) **EP 2 472 981 B1**

(12) **EUROPEAN PATENT SPECIFICATION**

(45) Date of publication and mention
of the grant of the patent:
**25.03.2015 Bulletin 2015/13**

(21) Application number: **10016211.4**

(22) Date of filing: **30.12.2010**

(51) Int Cl.:
***H04W 72/12*** *(2009.01)*

(54) **Method and apparatus for combined time and frequency domain scheduling**

Verfahren und Vorrichtung zur kombinierten Zeit- und Frequenzdomänenplanung

Procédé et appareil pour la programmation combinée de domaine de fréquence et de temps

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.07.2012 Bulletin 2012/27**

(73) Proprietor: **MIMOON GmbH
47057 Duisburg (DE)**

(72) Inventor: **Marandin, Dimitry
47057 Duisburg (DE)**

(74) Representative: **Eisenführ Speiser
Patentanwälte Rechtsanwälte PartGmbB
Postfach 31 02 60
80102 München (DE)**

(56) References cited:
**WO-A1-2010/052620      WO-A2-2008/026039**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>FIELD OF THE INVENTION</u>

The present invention relates to a method, apparatus and computer program product for scheduling radio resources in time and frequency domains in communication networks.

<u>BACKGROUND OF THE INVENTION</u>

Fourth generation (4G) cellular systems, such as the Long Term Evolution (LTE) system, will provide broadband wireless access with quality of service (QoS). Radio-specific functions and protocols in LTE networks are terminated at base stations. This allows performing a dynamic and fast resource allocation, taking into account instantaneous link quality information and instantaneous packet arrival data rate. By following fluctuations of radio link quality and adapting its transmission properties (modulation and coding, scheduling resources, power allocation), the radio channel capacity is better utilized.

Channel quality information for dynamic resource scheduling in downlink (DL) is obtained from Channel Quality Indicator (CQI) reports that are sent from a user terminal (user equipment (UE) in LTE terms) back to the base station (enhanced Node B (eNodeB or eNB) in LTE terms). To generate these reports the UE measures the channel quality on special radio resources, so-called reference signals.

The eNodeB MAC (Medium Access Control) layer is responsible for scheduling transmissions over the LTE air interface. It contains a scheduler unit that runs the scheduling algorithms or procedures which determine what gets sent, when, how and to/by whom. Scheduling algorithms are also responsible for guaranteeing the QoS requirements assigned to radio bearers.

The scheduler receives inputs from various sources which guide the scheduling procedure. The output of the scheduler is a series of resource assignments for a downlink and uplink subframe. Resource assignments are defined in terms of resource blocks (RBs). In LTE, a resource block occupies one slot in the time domain and twelve subcarriers in the frequency domain. The resource assignments output by the scheduler indicate the size of each transport block and what physical layer resources are to be used in sending it to the UE/eNodeB via Downlink Shared Channel (DL-SCH) and Uplink Shared Channel (UL-SCH) respectively. The resource assignment information is sent on the Physical Downlink Control Channel (PDCCH). Each UE monitors the PDCCH to obtain control information about assignments destined to it.

The DL-SCH is the main transport channel used for transmission of downlink (DL) data in LTE. It supports key LTE features such as dynamic link adaptation and channel-dependent scheduling in the time and frequency domains, spatial multiplexing and HARQ (hybrid automatic repeat request) retransmissions with soft combining.

In each transmission time interval (TTI), at most one DL-SCH transport block of a certain size is scheduled over the radio interface in absence of spatial multiplexing. In case of spatial multiplexing where independent streams of encoded data signals are separately transmitted from each transmit antenna so that the space dimension is multiplexed, there can be up to two transport blocks per TTI.

The dynamic link adaptation deals with how to set the transmission parameters (modulation scheme and channel coding rate) of a radio link to handle variations of the radio-link quality. Channel-dependent scheduling and link adaptation together try to exploit the channel variations through appropriate processing prior to transmission of the data. However, due to the random nature of the variations in the radio-link quality, perfect adaptation to the instantaneous radio-link quality is never possible. Thus, HARQ complements channel-dependent scheduling and link adaptation.

ARQ is an error-control method for data transmission that uses acknowledgements (i.e. messages sent by the receiver indicating that it has correctly received a transport block) and timeouts (specified periods of time allowed to elapse before an acknowledgment is to be received) to achieve reliable data transmission over an unreliable service. If the sender does not receive an acknowledgment before the timeout, it retransmits the transport block until the sender receives an acknowledgment or exceeds a predefined number of re-transmissions. In HARQ, forward error correction (FEC) bits are added to existing Error Detection (ED) bits to correct a subset of all errors while relying on ARQ to detect uncorrectable errors. As a result HARQ performs better than ordinary ARQ in poor signal conditions. Multiple parallel hybrid ARQ processes (channels) exist per UE. The scheduler is also responsible for resource allocation for HARQ retransmissions.

To select modulation scheme and channel coding rate, the transmitter needs information about the radio-link channel conditions. eNodeB transmits the downlink reference signal(pilot signal). This reference signal is transmitted from the base station with a constant power and is used by the mobile terminal to estimate the instantaneous downlink channel conditions. Information about the instantaneous downlink conditions is reported back to the base station.

The downlink scheduler dynamically controls the set of resource blocks (RBs) upon which UE's DL-SCH should be transmitted. It selects also a transport format (transport block size (TBS), modulation scheme, and antenna mapping) associated with each transport block. After the transport block assignment, the task of the MAC layer is to multiplex the UE data flows received from the Radio Link Control (RLC) layer on assigned transport block(s) to the UE. Logical-channel multiplexing for downlink transmissions is fully controlled by the base station (eNB). Multiplexing of logical channels depends on the priorities between different streams. For example, radio resource control signaling typically has a higher priority than streaming data, which in turn has higher priority than a background file transfer. Thus, QoS requirements must affect the multiplexing of different logical channels. Once the transport block is successfully decoded at the terminal, it will demultiplex the received data into the appropriate logical channels.

The scheduling algorithm is a base-station-implementation issue and is not specified in 3GPP standard.

In conventional max-C/I (or maximum rate) scheduling, the scheduler takes instantaneous radio-link conditions into account and schedules UE with the instantaneously best radio link conditions. This leads to a high system capacity, but 'starves' UEs with the bad channel conditions.

Furthermore, proportional fair (PF) scheduling has been proposed, where shared resources are assigned to the UE with the relatively best radio-link conditions, that is, at each time instant UE i is selected for transmission according to

$$i = \arg\max_{k} \frac{R_k}{\overline{R_k}} \tag{1}$$

where $R_k$ is the instantaneous data rate for UE k and $\overline{R_k}$ is the average data rate for the UE. Thus, the PF scheduler schedules an UE when its instantaneous channel quality is high relative to its own average channel condition over time.

Recently, QoS-aware packet schedulers have been proposed as modification of the PF scheduler. However, so far, these schedulers have not been adapted to respect QoS delay requirements, spatial multiplexing and HARQ retransmissions.

International patent application publication WO 2008/026039 A2 describes an apparatus and a corresponding method providing HARQ-aware packet scheduler. The described method and apparatus are operative in a wireless communications system and divide a communications resource available for performing information transmission and retransmission operations into a plurality of communication resource units. Channel quality information is used to rank each of the communication resource units in terms of channel quality. The communication resource units are divided into a first group having better channel quality and a second group having worse channel quality. The first group of communication resource units having better channel quality is used to transmit new information to a first group of receiving communication devices. The second group of communication resource units having worse channel quality is used to retransmit information to a second group of receiving communication devices. In such a manner, simultaneous scheduling of information transmission and retransmission can apparently be accommodated in a 3GPP LTE OFDM based wireless communications system.

SUMMARY

It is an object of the present invention to provide a scheduler or scheduling function that is not limited to channel state scheduling, but also takes into account enhanced features such as QoS, priority and latency, spatial multiplexing and retransmissions.

This object is achieved by a method as claimed in claim 1 and by an apparatus as claimed in claim 3.

In a first more specific exemplary implementation, a terminal device may be selected as a candidate for scheduling if it is not in a sleep cycle in discontinuous reception mode, not in a measurement gap and not in suspended mode and if at least one of the following conditions is true:

- the terminal device is in a state of pending retransmission;

- buffered data for the terminal device is available for transmission; and

- control signaling data is to be scheduled to the terminal device.

In a second more specific exemplary implementation which can be combined with the first more specific exemplary implementation, a number of resource blocks required for retransmission may be estimated for each terminal device with a pending retransmission, and these estimates for all terminal devices with pending retransmissions may be summarized to obtain an overall number of resource blocks to be reserved for retransmissions.

In a third more specific exemplary implementation which can be combined with the first or second more specific exemplary implementations, the first scheduling metric may be calculated on the basis of a quality weighing factor under consideration of an average delivered throughput rate of each terminal device.

In the third more specific exemplary implementation, the average delivered throughput rate may not be updated for retransmissions. As an additional option, the average delivered throughput rate may be updated for terminal devices based on transport block sizes assigned for new transmissions..

In a fourth more specific exemplary implementation which can be combined with any one of the first to third more specific exemplary implementations, the assigning for terminal devices of the first candidate list may comprise selecting a free resource block with the highest value of the first scheduling metric associated with a terminal device whose traffic demands are not satisfied, and wherein a terminal device is marked as satisfied if a new assigned transport block size is larger than the traffic demands of the terminal device.

In a fifth more specific exemplary implementation which can be combined with any one of the first to fourth more specific exemplary implementations, the second scheduling metric may be calculated by taking into account only instantaneous link conditions.

In a sixth more specific exemplary implementation which can be combined with any one of the first to fifth more specific exemplary implementations, the assigning for terminal devices of the second candidate list may comprise selecting a free resource block with the highest value of the second scheduling metric associated with a terminal device whose new assigned transport block size is not larger than a transport block size required to be retransmitted.

In a seventh more specific exemplary implementation, if there is still at least one free resource block after the assigning for terminal devices of the second candidate list, the free resource block(s) can be assigned to terminal devices of the first candidate list based on the first scheduling metric until all terminal devices of the first candidate list have obtained resource block sizes larger than their traffic demands or until no free RBs are available.

In an eighth more specific exemplary implementation which can be combined with any one of the first to sixth more specific exemplary implementations, a packet for transmission on a media access control (MAC) layer (so-called transport block) may be composed by multiplexing MAC control elements (CEs) first and then using a remaining space to include pending control packets of a higher layer. Then, the logical channels are multiplexed in decreasing order of priority by a data amount depending on past logical channel throughput and QoS requirements. Thus, by applying the quality weighing factor in the proportional fair scheduling metric and the quality-aware MAC multiplexing, the guaranteed bit rate, delay and priority requirements are ensured with a limited cost. Moreover, the proposed MAC multiplexing takes into account priorities of MAC control elements, radio link control (RLC) status packet data units (PDUs), RLC retransmissions and QoS requirements of logical channels.

The above apparatus may be implemented as a hardware circuit integrated on a single chip or chip set, or wired on a circuit board. As an alternative, at least parts of the apparatus may be implemented as a software program or routine controlling a processor or computer device. As an example, the software program or routine may be implemented in C type programming language.

Other advantageous modifications are defined in the dependent claims.

BRIEF DESCRIPTION OF THE DRAWINGS

The invention will now be described in greater detail based on embodiments with reference to the accompanying drawings in which:

Fig. 1 shows a schematic block diagram of an access device according to a first embodiment;

Fig. 2 shows a flow diagram of a time domain scheduling procedure according to the first embodiment;

Fig. 3 shows a flow diagram of a frequency domain scheduling procedure for new transmissions according to the first embodiment;

Fig. 4 shows a flow diagram of a frequency domain scheduling procedure for retransmissions according to the first embodiment;

Fig. 5 shows a flow diagram of a QoS aware MAC multiplexing procedure according to the first embodiment; and

Fig. 6 shows a schematic block diagram of software-based implementation according to a second embodiment.

DESCRIPTION OF THE EMBODIMENTS

In the following, embodiments of the present invention will be described based on an implementation of a resource block scheduler or scheduling function for a LTE network. However, it is to be noted that the present invention can be applied in various other types of cellular or wireless access networks which multiplexed channel structure.

The LTE air interface uses OFDM together with advanced antenna techniques and adaptive modulation and coding to achieve improvements in throughput and spectral efficiency. The uplink (UL) and downlink (DL) channels in the air interface are divided into frames and each frame is divided into subframes. Each subframe is divided into two time slots. Each time slot is divided in the frequency domain into a number of resource blocks (RBs). Data is allocated to UEs in terms of RBs. Depending on an OFDM sub-carrier spacing, an RB consists of 12 or 24 consecutive sub-carriers in the frequency domain. In the time domain, an RB consists of a plurality of consecutive OFDM symbols. The size of an RB is the same for all bandwidths, therefore the number of available physical resource blocks depends on the bandwidth. Depending on the required data rate, the scheduler can assign one or more RBs to each UE in each transmission time interval (TTI). The scheduling decision is done in the base station (eNB). The user data is carried on the Physical Downlink Shared Channel (PDSCH). Additionally, downlink (DL) control signaling on the Physical Downlink Control Channel (PDCCH) is used to convey the scheduling decisions to individual UEs. The PDCCH is located in the first OFDM symbols of a slot.

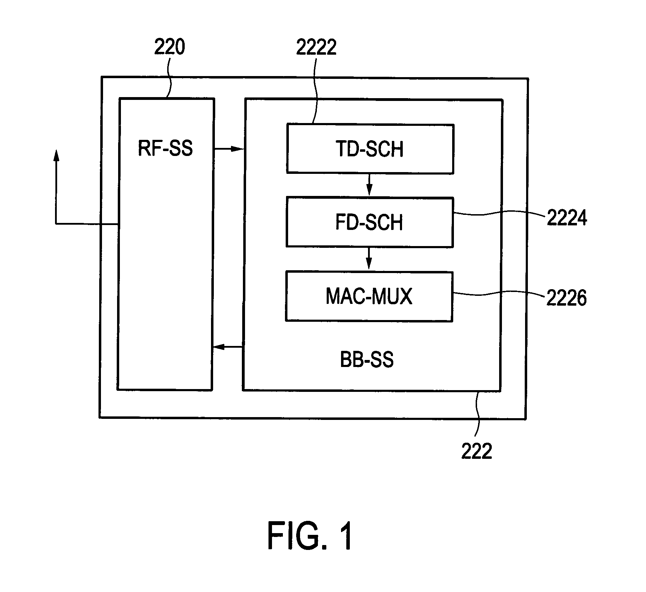

Fig. 1 shows a schematic block diagram of an access device according to a first embodiment, such as an eNB. The eNB may be implemented as a software defined radio (SDR) device, where major functionalities are implemented by software routines controlling digital signal processors (DSPs).

The eNB comprises an antenna subsystem which might consist of one or several antennas or antenna elements for achieving a directed or non-directed antenna characteristic. The antenna subsystem is connected to a radio frequency (RF) subsystem (RF-SS) 220 which may include an analog receiver chain (not shown) followed by an analog-to-digital (ADC) converter (not shown) which converts the received signal to the digital domain and outputs a stream of reception data frames to be forwarded to a baseband subsystem (BB-SS) 222 which could be implemented by at least one digital signal processor (DSP). Additionally, the RF subsystem 220 comprises a transmission chain (not shown) which supplies an analog transmission signal received from the baseband subsystem 222 via a digital-to-analog converter (not shown) to the antenna subsystem for wireless transmission.

According to the first embodiment, a MAC scheduler is provided in the baseband subsystem 222 and is configured to maximize spectral efficiency while providing QoS and fairness between UEs and flows. To achieve this, scheduling is separated for new transmissions and retransmissions. New transmissions are scheduled on the RBs with highest proportional fair (PF) metric up to space left for retransmissions, so that benefits can be obtained from channel-dependent scheduling. Retransmissions benefit from retransmission combining gain. Thus, retransmissions are scheduled on remaining resources using maximum rate or throughput scheduling. If after the scheduling of retransmissions, resource space is still left, a new scheduling round for new transmissions may start.

More specifically, the MAC scheduler is divided into three stages or blocks and comprises a time-domain scheduler or scheduling block (TD-SCH) 2222, a frequency-domain scheduler or scheduling block (FD-SCH) 2224 and a MAC logical channel multiplexer or multiplexing block (MAC-MUX) 2226. QoS awareness can be provided in the scheduling metric of the frequency-domain scheduling block 2224 and in the logical channel multiplexing block 2226.

It is noted that the time-domain multiplexing block 2222, the frequency-domain scheduling block 2224 and the logical channel multiplexing block 2226 may be implemented as discrete signal processing circuits or, alternatively, as threads or software routines.

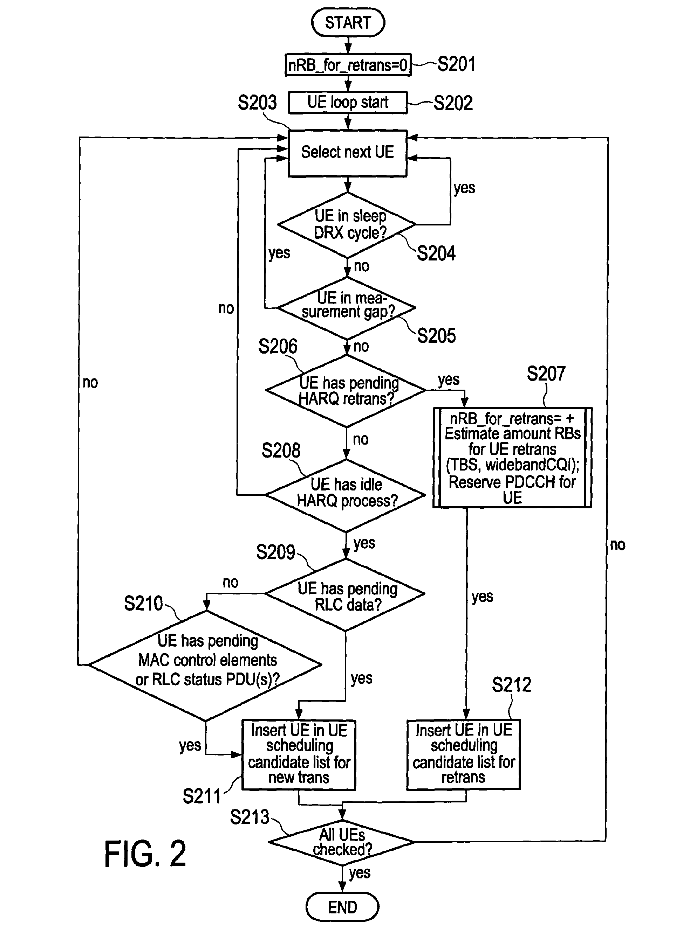

Fig. 2 shows a flow diagram of a time-domain scheduling procedure of the time-domain scheduling block 2222 according to the first embodiment.

The time-domain (TD) scheduling procedure is adapted to select UEs for potential scheduling in a considered TTI. In step S201 a running variable counting a number of RBs to be reserved for retransmissions is set to zero and a processing loop starts in step S202. Then, in step S203, a (next) UE attached to the base station is selected as a candidate for scheduling if it is not in the sleep cycle in Discontinuous Reception (DRX) mode (check in step S204) and not in measurement gaps/periods (check in step S205) and not in suspend mode (not shown) and if at least one of following conditions is true:

1) at least one HARQ channel of UE is in state of a pending retransmission (step S206);

2) at least one HARQ channel of UE is in idle state and RLC data (new RLC transmissions or RLC retransmissions) are buffered (steps S208 and S209);

3) at least one HARQ channel of UE is in idle state and MAC control elements are to be scheduled to UE (step S210);

4) at least one HARQ channel of UE is in idle state and RLC status PDU(s) are to be scheduled to UE (step S210).

For each UE with a pending retransmission, the scheduler knows a transport block size (TBS) to be retransmitted and a wideband channel quality identifier (CQI). Based on this information, a number of RBs required for retransmission is estimated. These estimates of the number of required RBs for all UEs with pending HARQ retransmissions are summarized to get an overall number of RBs to be reserved for retransmissions (step S207).

The output of time-domain scheduling is two UE candidate lists for new HARQ transmissions (step S211) and HARQ retransmissions (step S212) correspondingly. If a UE has pending both HARQ retransmission(s) and new HARQ transmission(s), it is inserted to a UE candidate list for HARQ retransmissions.

Additionally, a number of RBs that has to be reserved for retransmissions is available. The procedure ends if it is determined in step S213 that all UEs of the cell have been checked.

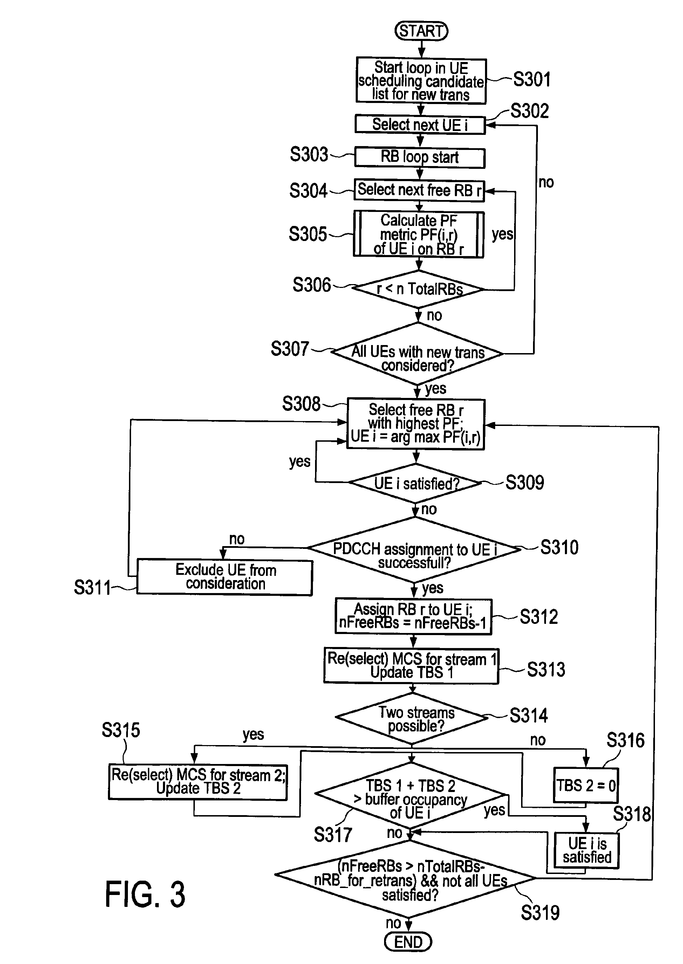

Fig. 3 shows a flow diagram of a frequency domain scheduling procedure of the frequency-domain scheduling block 2224 for new transmissions in a first scheduling round according to the first embodiment.

The scheduling loop is started in step S301 based on the candidate list for new transmissions and a (next) UE is selected in step S302. An RB loop starts in step S303 and the next free RB is selected in step S304. Then, for each UE with no pending retransmissions, a PF scheduling metric is calculated per each RB in steps S305 according to the following equation:

$$PF_k(RB_j)[n] = \eta_k[n]\frac{\breve{r}_k[n](RB_j)}{T_k[n-1]} , \qquad (2)$$

where $\breve{r}_k[n](RB_j)$ is an estimation of a supported throughput of UE $k$, if it would be scheduled in the next subframe n on RB $j$, $T_k[n]$ is an average delivered throughput of UE $k$ in the past including subframe $n$, $\eta_k[n]$ is a QoS weighing factor of UE $k$.

The input parameters for estimation of $\breve{r}_k[n](RB_j)$ are a set of available RBs and CQI for each of these RBs. If subband CQI for the specific RB is not available, wideband CQI reports can be used. Additionally, the used transmission mode, the selected transmission scheme and rank indication (RI) reports can be checked to identify whether one or two transport blocks could be transmitted to this UE. An important constraint in LTE is that the assigned RBs for one UE in TTI have to use the same modulation and coding scheme (MCS) can be ignored in the estimation of the UE supported data rate to simplify the implementation. Thus, estimation of supported data rate on the specific RB for UE is performed independently from other RBs.

$T_k[n]$ is an average delivered throughput of UE $k$ in the past including subframe n and can be calculated as follows:

$$T_k[n] = (1 - \{B_k[n] > 0\}\frac{1}{N_k})T_k[n-1] + \frac{1}{N_k}r_k[n], \qquad (3)$$

where $r_k[n]$ is the actual acknowledged throughput of UE $k$ in subframe n.

If a UE $k$ is not scheduled in the subframe $n$, $r_k[n]=0$. Even if UE $k$ is not scheduled in the subframe n, updating its average rate $T_k[n]$ is performed. The average update can be done in each subframe. $T_k[n]$ is estimated after reception of an acknowledgement (ACK) or when the data is sent the first time. Initially, the $T_k$ value can be initialized to the guaranteed bit rate (GBR) value for UE $k$. $T_k[n]$ is not updated for retransmissions. The initial value $T_k[n]$ for non-GBR UEs could be set to a maximum supportable data rate. Then, any initial value $T_k[n]$ for GBR-UEs will be smaller than for non-GBR-UEs. This will avoid a too high PF metric of non-GBR UEs at the initialization. $N_k$ may represent a filter memory (1000-2000 subfames, for example).

The term in the {} brackets of equation (3) is either "1" or "0" depending on whether the Boolean expression is right or wrong. $BK_k[n]$ is the amount of data pending in the base station buffer for UE $k$ after transmission in subframe n. Element $\{BK_k[n]>0\}$ ensures that the throughput estimate is only updated for UEs that have data. This is a practical formulation which ensures that UEs with empty buffers will not obtain a high PF scheduling metric due to small delivered throughput in the past. For QoS-requiring UEs, $\eta_k[n]$ is calculated as $max(\eta_{k,GBR}[n], \eta_{k,delay}[n])$, where:

$$\eta_{k,GBR}[n] = \{GBR_k > 0\}\frac{GBR_k}{T_{sch,k}[n]} \qquad (4)$$

$$\eta_{k,delay}[n] = \max\left\{ \{D_{req,k}(l) > 0\} \frac{D_{\exp,k}(l)}{D_{req,k}(l)} \right\} \tag{5}$$

where $GBR_k$ is the sum guaranteed bit rate (GBR) of UE$k$ over all its logical channels, $T_{sch,k}[n]$ is a past average scheduled throughput over the subframes where UE$k$ is actually scheduled, $D_{\exp,k}(l)$ is an average delay experienced by the head-of-line (HoL) packet since its entrance in the l-th logical channel queue or for simplified implementation it could be a period since logical channel (LCH) l was scheduled last time. $D_{req,k}(l)$ is a delay requirement for LCH l.

The past average scheduled throughput $T_{sch,k}[n]$ is a sum of throughput for all LCHs and can be calculated as follows:

$$T_{sch,k}[n] = (1 - \frac{\lambda_k[n]}{N_s})T_{sch,k}[n-1] + \frac{\lambda_k[n]}{N_s} r_k[n] \tag{6}$$

where $\lambda_k[n]$ is a indicator value, $\lambda_k[n]=1$ when UE$k$ is was scheduled in TTI n, $\lambda_k[n]=0$ when UE k was not scheduled in TTI n, $r_k[n]$ is a scheduled throughput of UE$k$ in the subframe n.

After the PF scheduling metric has been calculated for all UEs with new transmissions, the RB assignment loop starts in step S308. The assignment loop operates until it is determined in step S319 that all RBs for new transmissions (a number of all available RBs minus a number of RB reserved for retransmissions) are assigned or all UEs from the candidate list for new transmissions obtained transport block sizes larger than their traffic demands.

At each loop iteration, the algorithm selects in step S308 a free RB with the highest PF metric associated with an UE whose traffic demands are determined in step S309 as being not satisfied. If no RBs are assigned to this UE in the current subframe, the resource of the control channel (PDCCH in LTE) is assigned to this UE in step S310. When the control channel allocation in step S310 is successful, then this RB is assigned to UE in step S312. If not, the UE is excluded from consideration in step S311. After RB assignment, an MCS is selected in step S313 based on CQI recommendations for this RB and taking into account the previous MCS assignment to this UE based on other UE's RBs allocation in the considered subframe. Then, the assigned transport block size (TBS) of UE is updated. If it is determined in step S314 that the transmission mode, the transmission scheme and the reported rank indication (RI) report allow transmission of a second transport block, the same operations (MCS selection, TBS update) are repeated for it in step S315. If it is determined in step S317 that a new TBS is larger than UE traffic demands, UE is marked as satisfied in step S318.

It is noted that the scheduling procedure of Fig. 3 can be applied on resource block group (RBG) basis as well.

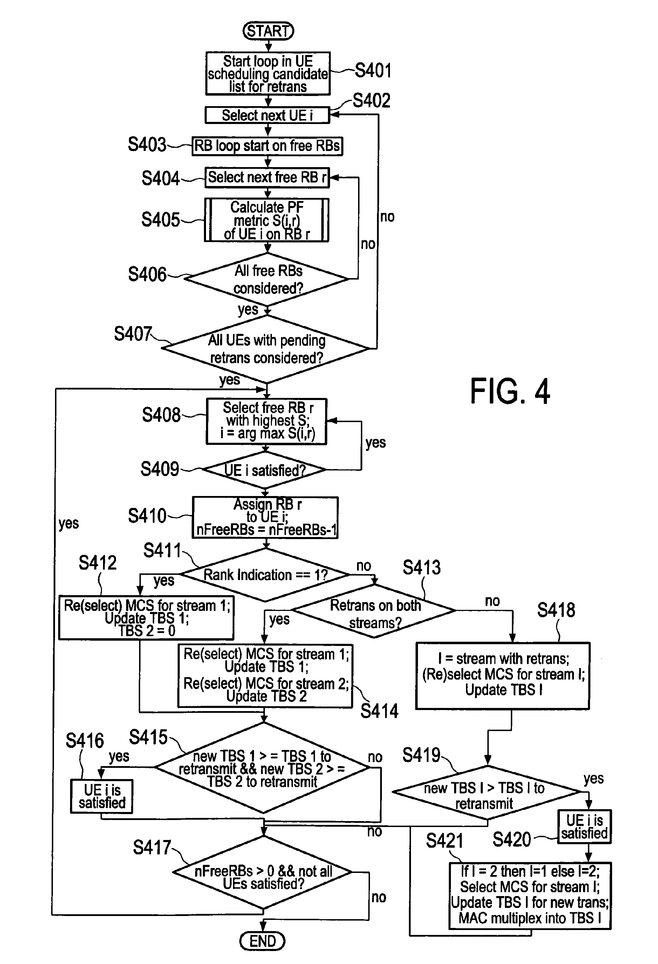

Fig. 4 shows a flow diagram of a frequency domain scheduling procedure of the frequency-domain scheduling block 2224 for retransmissions according to the first embodiment, which is initiated after the assignment of new transmissions in Fig. 3.

The scheduling loop starts in step S401 and a (next) scheduling candidate UE is selected from the candidate list for retransmissions in step S402. Then, the RB loop starts in step S403 on free RBs and the next free RB is selected in step S404. Then, for each UE with pending retransmissions, a scheduling metric is calculated in step S405 on remaining free RBs based on the following equation:

$$S_k(RB_j)[n] = \breve{r}_k[n](RB_j) \tag{7}$$

where $\breve{r}_k[n](RB_j)$ is an estimation of supported throughput of UE$k$, if it would be scheduled in the next subframe $n$ on RB$j$. Thus, in this case the frequency-domain scheduler 2224 takes only the instantaneous radio-link conditions into account.

After it is determined in steps S406 and S407 that the scheduling metric $S_k(RB_j)[n]$ has been calculated for all UEs with HARQ retransmissions, the RB assignment loop starts in step S408. The assignment loop operates until it is determined in step S417 that no free RBs are available or all UEs from a UE candidate list for HARQ retransmissions obtained TBS(s) larger than TBS(s) to be retransmitted.

At each loop iteration, the algorithm selects in step S408 a free RB with the highest scheduling metric associated with the UE (from the UE candidate list for retransmissions) whose assigned TBS(s) is larger than the TBS(s) required to be retransmitted. This RB is assigned to UE in step S410, a MCS is selected in step S412 based on CQI recommendations for this RB and taking into account the previous MCS assignment to this UE based on previous UE's RBs allocation in the considered subframe. Then, the assigned TBS of UE is updated. If the transmission mode, the transmission scheme and the reported rank indication (RI) report allow transmission of two streams (branch "NO" in step S411), the same operations (MCS selection, TBS update) are repeated per each stream in steps S414 (in case of retransmissions on two streams) or S418 (in case of retransmission on one stream). If a HARQ retransmission is required on one MIMO layer (branch "NO" in step S413) and UE can use two streams, the transport block on the second stream is used for a new transmission (step S421).

It is noted that the scheduling procedures of Fig. 3 and Fig. 4 can be applied on RBG basis as well.

If there are free RBs after the assignment of retransmissions in the procedure of Fig. 4 (i.e., in case when actually a less number of RBs for retransmissions as was reserved has been assigned due to favourable channel conditions), the PF scheduling metric of equation 2 can be checked again on each remaining RB and search for a UE with new transmissions with the highest PF scheduling metric on this RB. If this UE was already scheduled in the procedure of Fig. 3, it can be checked whether TBS(s) assigned to the UE in the first scheduling round in Fig. 3 is smaller than the UE traffic demands and whether the selected MCS(s) in the procedure of Fig. 2 can be applied for this RB. If the UE satisfies these two conditions, the RB is assigned to this UE and TBS(s) and MCS(s) of UE are updated. If the UE was not scheduled in the procedure of Fig. 3, the RB is assigned to the UE as described in the procedure of Fig. 3.

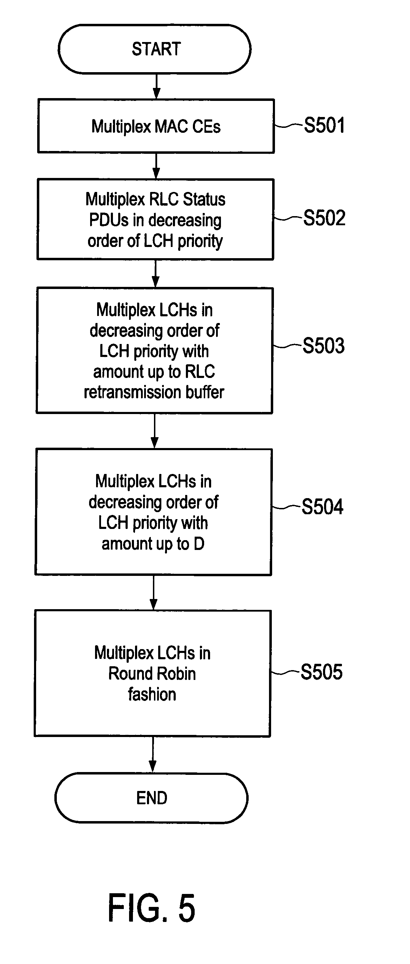

Fig. 5 shows a flow diagram of a QoS aware MAC multiplexing procedure of the logical channel multiplexing block 2226 according to the first embodiment.

In this procedure, TBS(s) assigned to UEs in the previous procedures of Figs. 3 and 4 are multiplexed.

A MAC control element (CE) has higher priority than any other logical channel because it controls the operation of the MAC entity of the eNB. Thus, when a MAC packet data unit (PDU) is composed and there is a MAC control element to send, the MAC control element is multiplexed first and the remaining space is used to include data from logical channels (step S501). If there is still room left in the MAC PDU each LCH is served again in step S502 in decreasing order of priority with the amount of data from each LCH required for pending RLC status PDU if available. Then, if there is still room left in the MAC PDU, LCHs with pending RLC re-transmissions are multiplexed in step S503 in decreasing order of priority, but the multiplexing amount of data from each logical channel with pending RLC retransmissions is limited to the amount equal to the size of RLC retransmissions. If there is still room left in the MAC PDU, in order to take into account both the GBR and the priority, each logical channel is multiplexed in decreasing order of priority in step S504, but the amount of data from each logical channel included into the MAC PDU is initially limited to an amount equal to a parameter D which can be calculated as follows:

$$D = GBR(l) \cdot \frac{GBR(l)}{T_l[n]} \tag{8}$$

where *GBR(l)* is a GBR requirement of logical channel *l*, $T_l[n]$ is a delivered past throughput of logical channel *l*.

When all GBRs logical channels have been served, then if there is still room left in the MAC PDU each LCH is served again in ins step S505 in round robin fashion up to the limit of LCH buffer occupancy until MAC PDU(s) is fully multiplexed.

Hence, MAC multiplexing takes into account priorities off MAC control elements, RLC status PDU, RLC re-transmissions and QoS requirements of logical channels.

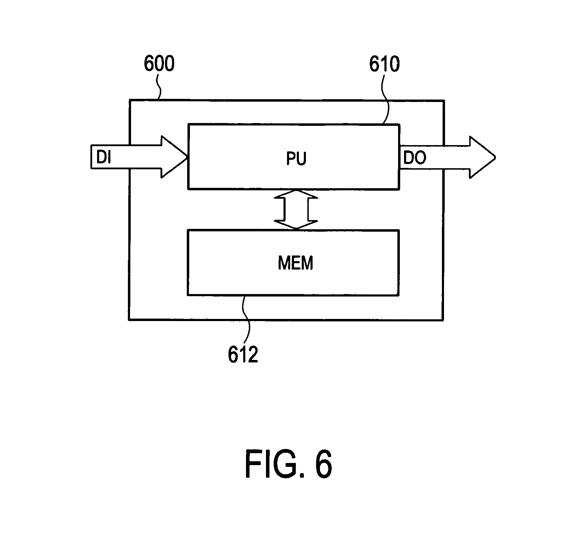

Fig. 6 shows a schematic block diagram of an alternative software-based implementation according to a second embodiment. The required functionalities can be implemented in the baseband subsystem 222 with a processing unit 610, which may be any processor or computer device with a control unit which performs control based on software routines of a control program stored in a memory 612. The control program may also be stored separately on a computer-readable medium. Program code instructions are fetched from the memory 612 and are loaded to the control unit of the processing unit 610 in order to perform the processing steps of Figs. 2 to 5, which may be implemented as the above mentioned software routines. The processing steps may be performed on the basis of input data DI and may generate output data DO. In case of the proposed scheduler, the input data DI may correspond to scheduling parameters (e.g. UEs, new transmissions, retransmissions, QoS parameters etc.), and the output data DO may correspond to the assigned resource blocks and/or the multiplexed output stream.

Consequently, the functionalities of the above embodiments may be implemented as a computer program product comprising code means for generating each individual step of the frame alignment procedure when run on a computer device or data processor of the respective entity.

The proposed scheduling is applicable for single-input-single-output (SISO) and for multiple-input-multiple-output (MIMO) systems. Moreover, it is fully compliant with the LTE standard femto scheduler application programming interface (API).

In summary, a method and apparatus for scheduling resource blocks of a transmission link in time and frequency domain have been described, wherein terminal devices are selected for potential scheduling to obtain a first candidate

EP 2 472 981 B1

list of terminal devices with new transmissions to be scheduled and a second candidate list of terminal devices with retransmissions to be scheduled. A number of resource blocks to be reserved for retransmissions is estimated. Then, a first scheduling metric is calculated per each resource block for each terminal device of the first candidate list and resource blocks are assigned for each terminal device of the first candidate list based on the first scheduling metric until all terminal devices of the first candidate list have obtained resource block sizes larger than their traffic demands or until all resource blocks for new transmissions (e.g. a number of all available resource blocks minus a number of resource blocks reserved for re-transmissions) are assigned. Then, a second scheduling metric is calculated per each remaining free resource block for each terminal device of the second candidate list and resource blocks are assigned for each terminal device of the second candidate list based on the second scheduling metric until no free resource blocks are available or all terminal devices of the second candidate list have obtained resource block sizes larger than their resource block sizes to be retransmitted. After that, a QoS- aware multiplexing procedure may use assigned resources to efficiently multiplex the data flows and control signaling of a terminal device.

It is apparent that the invention can easily be extended to scheduler and scheduling procedure of any access device and system and is not restricted to LTE networks. The proposed embodiments can be implemented in connection with any base station or access device for scheduling resources in time and frequency domains of communication networks. The embodiments may thus vary within the scope of the attached claims.

**Claims**

1.  A method of scheduling resource blocks of a transmission link in time and frequency domain, said method comprising:

    - selecting (S203), with a time domain scheduler, terminal devices for potential scheduling to obtain a first candidate list of terminal devices with new transmissions to be scheduled and a second candidate list of terminal devices with pending retransmissions to be scheduled;
    - estimating (S207) a number of resource blocks to be reserved for retransmissions;
    - calculating (S305), with a frequency domain scheduler, a first scheduling metric per each resource block for each terminal device of said first candidate list;
    - assigning (S312) resource blocks for each terminal device of said first candidate list based on said first scheduling metric until all resource blocks for new transmissions have been assigned or all terminal devices of said first candidate list have obtained resource block sizes larger than their traffic demands;
    - calculating (S405), with the frequency domain scheduler, a second scheduling metric per each remaining free resource block for each terminal device of said second candidate list; and
    - assigning (S410) resource blocks for each terminal device of said second candidate list based on said second scheduling metric until no free resource blocks are available or all terminal devices of said second candidate list have obtained resource block sizes larger than their transport block sizes to be retransmitted, the method further comprising:
    - composing a packet of a media access control layer by multiplexing (S501) control elements first and then using a remaining space to include pending status packets, then multiplexing (S502) logical channels in decreasing order of priority by a data amount dependant on past logical channel throughput and quality of service requirements, wherein a weighing factor is applied taking into account a guaranteed bit rate, delay and priority requirements.

2.  The method according to claim 1, wherein when all logical channels have been served according to the quality of service requirements, then if there is still room left, each logical channel is served again (S505) in round robin fashion up to the limit of its buffer occupancy or until a packet size is fully used.

3.  An apparatus for scheduling resource blocks of a transmission link in time and frequency domain, said apparatus comprising:

    - a time domain scheduler (2222) for selecting terminal devices for potential scheduling to obtain a first candidate list of terminal devices with new transmissions to be scheduled and a second candidate list of terminal devices with pending retransmissions to be scheduled; estimating (S207) a number of resource blocks to be reserved for retransmissions; and
    - a frequency domain scheduler (2224) for calculating a first scheduling metric per each resource block for each terminal device of said first candidate list, for assigning resource blocks to each terminal device of said first candidate list based on said first scheduling metric until all resource blocks for new transmissions have been assigned or all terminal devices of said first candidate list have obtained transport block sizes larger than their traffic demands, for calculating a second scheduling metric per each remaining free resource block for each terminal device of said second candidate list, and for assigning resource blocks for each terminal device of said second candidate list based on said second scheduling metric until no free resource blocks are available or all terminal devices of said second candidate list have obtained resource block sizes larger than their resource block sizes to be retransmitted, the apparatus further comprising:

- a media access control multiplexer (2226) for composing a packet of a media access control layer by multiplexing control elements first and then using a remaining space to include pending status packets of a higher layer, then multiplexing logical channels in decreasing order of priority by data amount dependant on past logical channel throughput and quality of service requirements, wherein a quality weighing factor is applied taking into account a guaranteed bit rate, delay and priority requirements.

4. The apparatus according to claim 3, wherein said frequency domain scheduler (2224) is adapted to assign remaining resource blocks to terminal devices of said first candidate list based on said first scheduling metric until all terminal devices of said first candidate list have obtained transport block sizes larger than their traffic demands or until no free resource blocks are available.

5. A computer program product comprising code means for producing the steps of method claim 1 when run on a computer device.

## Patentansprüche

1. Verfahren zum Zuordnen von Ressourcenblöcken einer Übertragungsverbindung im Zeit- und Frequenzbereich, wobei das Verfahren umfasst:

- Auswählen (S203), mit einem Zeitbereichszuordner, von Endgeräten zur möglichen Zuordnung, um eine erste Kandidatenliste von Endgeräten mit zuzuordnenden neuen Übertragungen und eine zweite Kandidatenliste von Endgeräten mit zuzuordnenden anhängigen erneuten Übertragungen zu erhalten;
- Schätzen (S207) einer Anzahl von Ressourcenblöcken, die für erneute Übertragungen zu reservieren sind;
- Berechnen (S305), mit einem Frequenzbereichszuordner, einer ersten Zuordnungsmetrik für jeden Ressourcenblock für jedes Endgerät der ersten Kandidatenliste;
- Zuweisen (S312) von Ressourcenblöcken für jedes Endgerät der ersten Kandidatenliste basierend auf der ersten Zuordnungsmetrik bis alle Ressourcenblöcke für neue Übertragungen zugewiesen worden sind oder alle Endgeräte der ersten Kandidatenliste Ressourcenblockgrößen erhalten haben, die größer sind als ihre Traffic-Anforderungen;
- Berechnen (S405), mit dem Frequenzbereichszuordner, einer zweiten Zuordnungsmetrik für jeden verbleibenden freien Ressourcenblock für jedes Endgerät der zweiten Kandidatenliste; und
- Zuweisen (S410) von Ressourcenblöcken für jedes Endgerät der zweiten Kandidatenliste basierend auf der zweiten Zuordnungsmetrik bis keine freien Ressourcenblöcke mehr verfügbar sind oder alle Endgeräte der zweiten Kandidatenliste Ressourcenblockgrößen erhalten haben, die größer sind als ihre erneut zu übertragenden Transportblockgrößen, wobei das Verfahren des Weiteren umfasst:
- Zusammenstellen eines Pakets einer Medienzugriffskontrollschicht durch zunächst Multiplexen (S501) von Kontrollelementen und dann Nutzen eines verbleibenden Raums, um anhängige Statuspakete einzufügen, dann Multiplexen (S502) von logischen Kanälen in absteigender Prioritätsordnung mit einer Datenmenge, die abhängig ist von einem früheren Logischer-Kanal-Durchsatz und Dienstqualitätsanforderungen, wobei ein Gewichtungsfaktor angewandt wird, der eine garantierte Bitrate, Verzögerungs- und Prioritätsanforderungen berücksichtigt.

2. Verfahren nach Anspruch 1, wobei, wenn alle logischen Kanäle entsprechend der Dienstqualitätsanforderungen bedient worden sind, dann, falls immer noch Platz übriggeblieben ist, jeder logische Kanal erneut (S505) in einer Round-Robin-Art bedient wird, bis zu der Grenze seines Pufferfüllstands oder bis eine Paketgröße vollständig genutzt worden ist.

3. Vorrichtung zum Zuordnen von Ressourcenblöcken einer Übertragungsverbindung im Zeit- und Frequenzbereich, wobei die Vorrichtung umfasst:

- einen Zeitbereichszuordner (2222) zum Auswählen von Endgeräten zur möglichen Zuordnung, um eine erste Kandidatenliste von Endgeräten mit zuzuordnenden neuen Übertragungen und eine zweite Kandidatenliste von Endgeräten mit zuzuordnenden anhängigen erneuten Übertragungen zu erhalten, und zum Schätzen (S207) einer Anzahl von Ressourcenblöcken, die für erneute Übertragungen zu reservieren sind; und

- einen Frequenzbereichszuordner (2224) zum Berechnen einer ersten Zuordnungsmetrik für jeden Ressourcenblock für jedes Endgerät der ersten Kandidatenliste, zum Zuweisen von Ressourcenblöcken zu jedem Endgerät der ersten Kandidatenliste basierend auf der ersten Zuordnungsmetrik bis alle Ressourcenblöcke für neue Übertragungen zugewiesen worden sind oder alle Endgeräte der ersten Kandidatenliste Transportblockgrößen erhalten haben, die größer sind als ihre Traffic-Anforderungen, zum Berechnen einer zweiten Zuordnungsmetrik für jeden verbleibenden freien Ressourcenblock für jedes Endgerät der zweiten Kandidatenliste, und zum Zuweisen von Ressourcenblöcken für jedes Endgerät der zweiten Kandidatenliste basierend auf der zweiten Zuordnungsmetrik bis keine freien Ressourcenblöcke mehr verfügbar sind oder alle Endgeräte der zweiten Kandidatenliste Ressourcenblockgrößen erhalten haben, die größer sind als ihre erneut zu übertragenden Ressourcenblockgrößen, wobei die Vorrichtung des Weiteren umfasst:

- einen Medienzugriffskontrollmultiplexer (2226) zum Zusammenstellen eines Pakets einer Medienzugriffskontrollschicht durch zunächst Multiplexen von Kontrollelementen und dann Nutzen eines verbleibenden Raums, um anhängige Statuspakete einer höheren Schicht einzufügen, dann Multiplexen von logischen Kanälen in absteigender Prioritätsordnung mit einer Datenmenge, die abhängig ist von einem früheren Logischer-Kanal-Durchsatz und Dienstqualitätsanforderungen, wobei ein Qualitätsgewichtungsfaktor angewandt wird, der eine garantierte Bitrate, Verzögerungs- und Prioritätsanforderungen berücksichtigt.

4. Vorrichtung nach Anspruch 3, wobei der Frequenzbereichszuordner (2224) angepasst ist, verbleibende Ressourcenblöcke basierend auf der ersten Zuordnungsmetrik Endgeräten der ersten Kandidatenliste zuzuweisen, bis alle Endgeräte der ersten Kandidatenliste Transportblockgrößen erhalten haben, die größer sind als ihre Traffic-Anforderungen oder bis keine freien Ressourcenblöcke mehr verfügbar sind.

5. Computerprogrammprodukt, umfassend Codiermittel zum Erzeugen der Schritte des Verfahrensanspruchs 1, wenn diese auf einer Computervorrichtung ausgeführt werden.

## Revendications

1. Procédé de programmation de blocs de ressource d'une liaison de transmission dans le domaine de temps et de fréquence, procédé dans lequel :

- on sélectionne (S203), par un programmateur de domaine de temps, des terminaux de programmation potentielle pour obtenir une première liste de candidats de terminaux ayant de nouvelles transmissions à programmer et une deuxième liste de candidats de terminaux ayant des retransmissions pendantes à reprogrammer ;
- on estime (S207) un nombre de blocs de ressource à réserver pour des retransmissions ;
- on calcule (S305), par un programmateur de domaine de fréquence, une première métrique de programmation pour chaque bloc de ressource pour chaque terminal de la première liste de candidats ;
- on affecte (S312) des blocs de ressource à chaque terminal de la première liste de candidats sur la base de la première métrique de programmation jusqu'à ce que tous les blocs de ressource pour des transmissions nouvelles aient été affectés ou jusqu'à ce que tous les terminaux de la première liste de candidats aient obtenu des dimensions de bloc de ressource plus grandes que leurs demandes de trafic ;
- on calcule (S405), par le programmateur de domaine de fréquence, une deuxième métrique de programmation pour chaque bloc de ressource libre restant pour chaque terminal de la deuxième liste de candidats ; et
- on affecte (S410) des blocs de ressource pour chaque terminal de la deuxième liste de candidats sur la base de la deuxième métrique de programmation jusqu'à ne plus disposer de blocs de ressource libres ou jusqu'à ce que tous les terminaux de la deuxième liste de candidats aient obtenu des dimensions de bloc de ressource plus grandes que leurs dimensions de bloc de transport à retransmettre, procédé dans lequel, en outre :
- on compose un paquet d'une couche de commande d'accès au support en multiplexant (S501) des éléments de commande d'abord et ensuite, en utilisant un espace restant, pour inclure des paquets d'états pendants, puis en multiplexant (S502) des canaux logiques dans l'ordre décroissant de priorité, par une quantité de données dépendant de la capacité passée des canaux logiques et de la qualité d'exigences de service, un facteur de pondération étant appliqué, facteur qui prend en compte un débit binaire garanti, un retard et des exigences de priorité.

2. Procédé suivant la revendication 1, dan lequel, lorsque tous les canaux logiques ont été servis suivant la qualité des exigences de service, s'il reste encore de la place, chaque canal logique est resservi (S505) à la manière d'un tour robin jusqu'à la limite de son coefficient d'occupation tampon ou jusqu'à ce qu'une dimension de paquet ait été utilisée complètement.

3. Dispositif pour programmer des blocs de ressource d'une liaison de transmission dans le domaine de temps et de fréquence, le dispositif comprenant :

- un programmateur (2222) de domaine de temps pour sélectionner des terminaux de programmation potentielle, pour obtenir une première liste de candidats de terminaux ayant des transmissions nouvelles à programmer et une deuxième liste de candidats de terminaux ayant des retransmissions pendantes à programmer, pour estimer (S207) un nombre de blocs de ressource à réserver à des retransmissions ; et
- un programmateur (2224) de domaine de fréquence pour calculer une première métrique de programmation pour chaque bloc de ressource pour chaque terminal de la première liste de candidats pour affecter des blocs de ressource à chaque terminal de la première liste de candidats sur la base de la première métrique de programmation jusqu'à ce que tous les blocs de ressource pour des transmissions nouvelles aient été affectés ou jusqu'à ce que tous les terminaux de la première liste de candidats aient obtenu des dimensions de bloc de transport plus grandes que leurs demandes de trafic, pour calculer une deuxième métrique de programmation pour chaque bloc de ressource libre restant pour chaque terminal de la deuxième liste de candidats, et pour affecter des blocs de ressource pour chaque terminal de la deuxième liste de candidats sur la base de la deuxième métrique de programmation jusqu'à ne plus disposer de blocs de ressource libres ou jusqu'à ce que tous les terminaux de la deuxième liste de candidats aient obtenu des dimensions de bloc de ressource plus grandes que leurs dimensions de bloc de ressource à retransmettre, le dispositif comprenant, en outre :
- un multiplexeur (2226) de commande d'accès au support pour composer un paquet d'une couche de commande d'accès au support en multiplexant des éléments de commande d'abord, puis en utilisant un espace restant pour inclure des paquets d'états pendants d'une couche supérieure, puis en multiplexant des canaux logiques dans l'ordre décroissant de priorité par une quantité de données dépendant de la capacité passée des canaux logiques et de la qualité des exigences de service, un facteur de pondération de qualité étant appliqué et prenant en compte un débit binaire garanti, un retard et des exigences de priorité.

4. Dispositif suivant la revendication 3, dans lequel le programmateur (2224) de domaine de fréquence est conçu pour affecter des blocs de ressource restant des terminaux de la première liste de candidats sur la base de la première métrique de programmation jusqu'à ce que tous les terminaux de la première liste de candidats aient obtenu des dimensions de bloc de transport plus grandes que leurs demandes de trafic ou jusqu'à ce que des blocs de ressource libres ne soient plus disponibles.

5. Produit de programme d'ordinateur comprenant des moyens de code pour produire les stades du procédé de la revendication 1 lorsqu'ils passent sur un dispositif d'ordinateur.

FIG. 1

FIG. 2

START

Start loop in UE scheduling candidate list for new trans — S301

Select next UE i — S302

S303 — RB loop start

S304 — Select next free RB r

S305 — Calculate PF metric PF(i,r) of UE i on RB r

S306 — r < n TotalRBs — yes

no

S307 — All UEs with new trans considered?

yes

S308 — Select free RB r with highest PF; UE i = arg max PF(i,r)

UE i satisfied? — S309 — yes

no

PDCCH assignment to UE i successfull? — S310

no

S311 — Exclude UE from consideration

yes

Assign RB r to UE i; nFreeRBs = nFreeRBs-1 — S312

Re(select) MCS for stream 1 Update TBS 1 — S313

Two streams possible? — S314

S315 — yes

no — S316

Re(select) MCS for stream 2; Update TBS 2 — S315

TBS 2 = 0 — S316

TBS 1 + TBS 2 > buffer occupancy of UE i — S317 — yes

no

UE i is satisfied — S318

(nFreeRBs > nTotalRBs- nRB_for_retrans) && not all UEs satisfied? — S319

no

END

FIG. 3

START

S401 — Start loop in UE scheduling candidate list for retrans

S402 — Select next UE i

S403 — RB loop start on free RBs

S404 — Select next free RB r

S405 — Calculate PF metric S(i,r) of UE i on RB r

S406 — All free RBs considered? — no

S407 — All UEs with pending retrans considered? — no

yes

FIG. 4

S408 — Select free RB r with highest S; i = arg max S(i,r)

yes

S409 — UE i satisfied?

S410 — Assign RB r to UE i; nFreeRBs = nFreeRBs-1

S411 — Rank Indication == 1? — no — S413

S412 — yes

Re(select) MCS for stream 1; Update TBS 1; TBS 2 = 0

S413 — Retrans on both streams? — no — S418

yes

S414 — Re(select) MCS for stream 1; Update TBS 1; Re(select) MCS for stream 2; Update TBS 2

S418 — I = stream with retrans; (Re)select MCS for stream I; Update TBS I

S415 — new TBS 1 > = TBS 1 to retransmit && new TBS 2 > = TBS 2 to retransmit — no

S416 — yes — UE i is satisfied

S419 — new TBS I > TBS I to retransmit — yes

S420 — UE i is satisfied

S417 — nFreeRBs > 0 && not all UEs satisfied? — yes / no

S421 — If I = 2 then I=1 else I=2; Select MCS for stream I; Update TBS I for new trans; MAC multiplex into TBS I

END

START

Multiplex MAC CEs ⎯S501

Multiplex RLC Status PDUs in decreasing order of LCH priority ⎯S502

Multiplex LCHs in decreasing order of LCH priority with amount up to RLC retransmission buffer ⎯S503

Multiplex LCHs in decreasing order of LCH priority with amount up to D ⎯S504

Multiplex LCHs in Round Robin fashion ⎯S505

END

# FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008026039 A2